# EUROPEAN PATENT SPECIFICATION

(11) **EP 3 540 381 B1**
(45) Date of publication and mention of the grant of the patent: **19.02.2020**
(21) Application number: 18200063.8
(22) Date of filing: 12.10.2018
(51) Int. Cl.: G01F 1/68, G01F 15/02, G01F 1/74, G01F 1/34

(54) **FLOW MEASUREMENT IN VALVES WITH THERMAL CORRECTION**
DURCHFLUSSMESSUNG IN VENTILEN MIT THERMISCHER KORREKTUR
MESURE D'ÉCOULEMENT DANS DES VANNES À CORRECTION THERMIQUE

(30) Priority: 16.03.2018 EP 18162331
(43) Date of publication of application: 18.09.2019
(73) Proprietor: Siemens Aktiengesellschaft, 80333 München (DE)
(72) Inventor: Glöckle, Steffen, 76297 Stutensee (DE); Oßwald, Sven, 70343 Fellbach (DE); Schmanau, Mike, 76316 Malsch (DE); Wetzel, Martin, 76437 Rastatt (DE)
(74) Representative: Maier, Daniel Oliver

(56) References cited:
- EP-A1- 1 411 355
- KR-B1- 101 702 960
- US-A- 3 691 832
- US-A1- 2003 115 950
- US-A1- 2012 080 104

## Description

This patent application describes measuring a flow rate of a predetermined fluid through a valve. Furthermore, this document describes a valve device with a valve connectable to a pipe system.

If a mass flow rate or volumetric flow rate through a pipe within a pipe system should be measured, in most cases a sensor is applied. This sensor is often only capable to measure a certain part of the fluid flow. This means that the sensor does not measure the overall flow rate through a pipe or a valve. It only measures a local quantity of the fluid flow within the pipe.

There exist several aspects that influence the measured quantity of the sensor. Therefore, the measured quantity of the sensor is usually not representative of the overall flow rate through the pipe. The following aspects for example influence the measured quantity of the sensor and the conversion of the measured quantity to the overall flow rate, respectively. The measured quantity of the sensor depends on the valve position or on the shape of the means that influence the flow rate through the valve. The flow pattern of the fluid flow at the position of the sensor also influences its measured quantity.

The measurement of the sensor also depends on the type of fluid or its degree of mutation. The pipe geometry upstreaming the valve also has an influence on the measurement of the sensor. For example, a 90° pipe bend may change the flow pattern of the fluid flow. Furthermore, also the temperature of the fluid influences the measurement of the sensor.

A patent KR 101 702 960 B1 issued on 9 February 2017. An application for this patent was filed on 3 November 2015. The patent KR 101 702 960 B1 teaches a pressure control device and a pressure control method using the device.

The document DE 103 05 889 B4 describes a valve. In particular this valve comprises one single sensor in order to measure a flow rate of the fluid within the valve.

The document EP 0 946 910 B2 describes a flow regulation fitting. This flow regulation fitting is able to adjust the flow rate through a pipe system. The flow regulation fitting device comprises a sensor that measures a quantity that is representative for the fluid flow rate through the valve. In particular, this sensor is arranged flatly on the fluid flow channel within the valve.

A patent application EP1411355A1 was filed on 18 October 2002. The application EP1411355A1 was published on 21 April 2004. EP1411355A1 teaches a method and device for determining a characteristic value that is representative of the condition of a gas.

A patent application US2012/080104A1 was filed on 30 September 2011. The application US2012/080104A1 was published on 5 April 2012 and claims priority of an earlier application JP 2010220722 of 30 September 2010. US2012/080104A1 teaches a diagnostic mechanism.

The task of this disclosure is to provide a valve device that is able to measure the flow rate through the valve by considering at least one thermal aspect that influences the measurement of the at least one sensor.

This task can be solved by the disclosure according to the independent claim. Advantageous embodiments of this disclosure are described by the dependent claims.

This disclosure describes measuring a flow rate of a predetermined fluid through a valve by performing the following steps. In a step a) at least a local fluid velocity is measured in the valve. Preferably this measuring is performed with a first sensor. For the next step two options b1) or b2) exist. In option b1) a temperature of the predetermined fluid in the valve is measured with a second sensor. Alternatively in option b2) the temperature of the predetermined fluid is measured in the valve and a valve position of the valve is also measured. This means in both options b1) or b2) the temperature of the predetermined fluid is measured. In option b2) furthermore also a valve position of the valve is additionally measured. The temperature of the predetermined fluid is measured in all options of the disclosure and it is preferably measured the absolute temperature in units of Kelvin.

For example, if a fluid has a temperature of 20°C, the first sensor measures a temperature of 293.15 Kelvin. The second sensor can measure the valve position of the valve in option b2). In particular the valve position of the valve describes an opening degree of the valve. The valve position can be for example a valve lift if the valve comprises a hub by which the flow rate through the valve can be influenced. If the valve is realised as a ball valve, the valve position can be described by the orientation of the ball with its hollow within the valve. Usually, a valve allows to adjust the flow rate within the valve. A very simple valve would be a shutoff valve. Such a valve may only allow for opening or shutting off completely. In this case the valve position would be 0 % or 100 %. An opening degree of 0 % would mean that the valve blocks a fluid flow and therefore the flow rate is 0 m³/s. An opening degree of 100 % means that the valve does not additionally reduce the fluid flow rate.

Most valves allow additional valve positions between the opening degrees of 0 % and 100 %. For example, a ball valve allows to adapt the flow rate of the fluid. For example, it is possible to reduce a flow rate of liquid water from 30 l/s to 10 l/s. This means that the current disclosure addresses especially such valves that allow to adjust different valve positions beside the extreme valve positions of 0 % and 100 %.

In a step c) the flow rate through the valve is determined by considering the measured local fluid velocity in step a) and the measured parameters in steps b1) or b2). This means that an overall fluid flow rate through the valve is determined by considering the local fluid velocity on the one hand and at least one measured temperature of the predetermined fluid. In other words, the local fluid velocity that represents a part of the flow rate at the position of the first sensor is transformed into an overall quantity which is the flow rate through the valve. This can be achieved for example by a characteristic diagram. With such a characteristic diagram a fluid velocity profile over the cross section of a flow channel within the valve can be determined. Such a fluid velocity profile is in particular temperature-dependent and therefore by measuring the temperature of the fluid an additional information about the fluid flow can be gathered. This information can help to identify the flow pattern through the valve.

The temperature of the predetermined fluid has in particular influence on the flow pattern of the fluid flow. For example, it is of great interest to classify the fluid flow through the valve into the categories turbulent or laminar flow. Therefore, additionally the temperature of the fluid in the valve is necessary. Together with the measurements of one of the options b1) or b2) this local fluid velocity can be transformed or calculated into the overall flow rate through the valve. In other words, the local fluid velocity can be extrapolated to the overall flow rate through the valve by using the temperature of the predetermined fluid. It is not necessary to measure the amount of water that passes the valve within a period of time to calculate the flow rate through the valve. The principle of this disclosure enables an effective and accurate flow rate measurement of a fluid flow through a valve.

For example, a fluid flow in a circular pipe is often considered to be laminar if the Reynolds number is less than 2300. If the Reynolds number is larger than 2300, a fluid flow within a circular pipe is often considered as turbulent. These different flow patterns may have different fluid velocity distributions over the pipe cross section. Therefore, it is usually not sufficient to measure a local fluid velocity only at a single position within the pipe. To determine the flow rate through the valve precisely enough more information about the flow pattern through the valve is necessary.

In this variant of the disclosure the density and/or viscosity of the fluid in the valve are determined and this additional information can be used to classify the specific flow pattern. Therefore, a measuring of the viscosity can help to capture or determine the fluid velocity profile along a cross section of a flow channel in the valve. With the knowledge of this fluid velocity profile in the valve the overall flow rate through the valve may be calculated more exactly originating from the local fluid velocity. The local fluid velocity in combination with the temperature and in this variant with the density and/or viscosity can be transformed into the flow rate of the valve. To do this, an appropriate characteristic diagram and/or adapted equation can be used for the flow rate determination. It is also possible that different flow patterns may be matched to appropriate flow rates. For example, in a look-up table several flow patterns in a specific geometry together with the local fluid velocities and their corresponding overall flow rates may be stored. In this case, the measured local fluid velocity and the determined flow pattern via the viscosity and/or density of the fluid directly leads to the overall flow rate through the valve. By additionally considering the density and/or viscosity the determining of flow rate through the valve may become more precisely.

A fluid may also suffer from mutation if for example a fluid comprises two different components and these two different components chemically react with each other. In this case, the chemical and physical properties of the fluid would change. By determining the heat conductivity and/or the heat capacity of the fluid such mutations or changes of the fluid may be detected. In particular, such mutations can be registered that do not arise from different flow rates or flow patterns. In particular, the heat conductivity and/or heat capacity of the fluid can be determined at several positons in the valve. For example, if the fluid is liquid water that is heated up in a pipe system, a phase change significantly influences the fluid properties and therefore the measurement of the second sensor. If in this example at one positon in the valve a heat conductivity of 0.6 W/ (m K) is measured and at another position in the valve a heat conductivity of only 0.025 W/ (m K) is registered, this can be a significant hint for a phase change of the water. In this situation it is probable that at the position where the lower heat conductivity has been measured gaseous water or at least non-condensable gases are present. A non-condensable gas may be air that degassed from the liquid water. In this situation these two significantly different values for the heat conductivity may indicate that a two-phase flow situation is present in the flow channel of the valve. Therefore, especially a flow characteristic for two-phase flows should be applied instead of a single-phase flow characteristic. If a flow rate determination is not exactly possible in case of a two-phase flow, at least the information can be extracted that the determined flow rate may be incorrect. In many pipe systems a phase change does not occur and therefore the measuring of the heat conductivity and/or heat capacity may be used as an indicator of a change in fluid properties.

If the fluid is in another example gasoline and some water enters into the pipe system due to leakages, a mixture of gasoline water is present in the pipe system and therefore also in the valve. This means the gasoline contains some impurities. A change in the heat conductivity and/or heat capacity of the fluid may indicate impurities of the fluid. In case of this example the water represents the impurity. If a significant amount of water contaminates the gasoline, a change in the heat conductivity and/or heat capacity of the gasoline is measurable. By measuring the heat conductivity and/or the heat capacity of the present fluid and comparing these values with standard values of the fluid without impurities a change of the fluid may be recognisable. This helps to supervise whether still the same fluid is present in the pipe system or in the valve. By considering the heat conductivity and/or the heat capacity of the fluid it can be avoided that the fluid drastically changes without being recognized. This means that this variant of the disclosure does not claim to identify the exact type of fluid in the valve, it only aims at recognizing significant changes of the fluid that are not induced by a changed flow rate or a changed flow pattern.

This means that each of the several first sensors can be matched to a certain volumetric part of the flow channel. The weighting factors can consider these different volumetric fractions. By considering several local fluid velocities and determining an effective fluid velocity from these several local fluid velocities the accuracy and stability of the flow rate determination can be improved or enhanced.

This principle is also valid if the second sensor measures a temperature of the fluid. By measuring the fluid pressure by the second sensor, information about a pressure distribution within the valve can be gathered. This additional pressure information can be useful in order to classify the actual flow pattern present in the valve. Therefore, a measurement of the pressure by the second sensor can help to identify the fluid velocity distribution in the flow channel of the valve. By knowledge of the fluid velocity profile in the valve a more accurate determination of the overall flow rate is possible. In most cases a two-dimensional fluid velocity profile across a cross section of the valve is sufficient for determining the flow rate through the valve. In complex situations, it may be necessary to determine a three-dimensional fluid velocity distribution. In this case several second sensors may be necessary and applied. Advantageously, the second sensor is located at such position within the valve that a determination of a two-dimensional fluid velocity profile is sufficient.

This disclosure comprises also a valve device with a valve connectable to a pipe. This valve device comprises a flow channel in the valve and a first sensor that is configured to measure a local fluid velocity in the flow channel. Furthermore, the valve device comprises a second sensor that is configured to measure the temperature of the fluid in the flow channel or the second sensor is configured to measure the temperature of the fluid in the flow channel and a valve position. This means there are two measuring options for the senor. In the first option i) the second sensor measures only the temperature of the fluid in the flow channel, in the second option ii) the second sensor measures additional to the temperature of the fluid in the flow channel also the valve position of the valve. Furthermore, the valve device comprises a control unit that is configured to determine the flow rate through the rate by considering the measured local fluid velocity and the measured parameters in steps i) or ii). Mentionable is the fact that the valve device does not comprise a pipe system. It may actually be connect to a pipe system. This means that the measurements of the first and second sensor are conducted at or in the valve device. The control unit can be implemented into the first sensor or the second sensor. It is also possible that the control unit is not located at or in the valve. In this case the control unit preferably has a connection to the first sensor and the second sensor. For example, the first sensor and the second sensor may be connected to a computer terminal that receives the signals from the first sensor and second sensor. The connection of the first sensor or second sensor to the control unit can be wired or wireless. The described advantages in the different variants of this disclosure also apply to the valve device.

In another variant of this disclosure a valve device is described, wherein the second sensor is configured as a temperature sensor and the temperature sensor protrudes into the flow channel of the valve. Preferably, this disclosure aims at considering temperature effects on the flow rate. A different fluid temperature in the valve affects the viscosity and therefore the Reynolds number of the fluid flow. This means that the temperature also affects the flow pattern in the flow channel. Therefore, it is advantageous to measure the temperature of the fluid within the valve. In general, this could also be achieved by the first sensor.

It should be considered that the first sensor is optimized for measuring the local fluid velocity. This means that the type of the first sensor and its position within the valve is selected in such a way that the local fluid velocity can be measured effectively. In order to obtain information about the flow pattern in the valve, it may be necessary to measure the temperature of the fluid at another position than the position of the first sensor. Therefore, it may be useful that the second sensor is configured as a temperature sensor. In this case, the second sensor can be optimized with regard to temperature measurements. If the temperature sensor protrudes into the flow channel, the fluid temperature is measured rather than a temperature of the wall of the valve. This may reduce errors in the temperature measurements. The measured temperature of the second sensor may be more representative for the temperature of the fluid. This may improve the determination of the flow pattern in the flow channel of the valve. Finally, the determination of the fluid velocity profile in the flow channel and therefore the determination of the overall flow rate through the valve may be more accurate due to an improved fluid temperature measurement.

Another variant of this disclosure describes a valve device, wherein the second sensor has such a protrusion into the flow channel of the valve that for two different predetermined flow patterns with the same flow rate for each one of the predetermined flow patterns the same flow rate for the valve is determined. One of the two different predetermined flow patterns may be defined as laminar flow and the other one as turbulent flow. These different flow patterns may be classified by two different Reynolds numbers. In both cases the second sensor has the same protrusion into the flow channel of the valve. Nevertheless, the final result of c) is the same in this situation. In case of the first flow pattern, for example the laminar flow, a first fluid velocity value and a first temperature value are measured. In case of the second flow pattern with the same flow rate, for example in this case the turbulent flow, a second local fluid velocity and a second temperature are measured.

Since the temperature may not be homogenous within the valve, the first temperature may differ from the second temperature. This means that in both cases the first sensor measures a first and second local fluid velocity in the flow channel of the valve. The second sensor, the temperature sensor, protrudes in both cases into the flow channel of the valve. The degree of protrusion is in both cases the same. For the first flow pattern a first fluid velocity and a first temperature are measured. For the second flow pattern a second temperature and a second local fluid velocity are measured. The degree of protrusion of the second sensor into the flow channel is set in such a way that in case of the same overall flow rate for both flow patterns the same flow rate is determined according to step c) of the disclosure. This degree of protrusion of the temperature sensor into the flow channel of the valve can be determined by considering fluid dynamics physics. This means that the valve device is sensitive to changes in the flow rate. It is less susceptible to changes in the flow pattern without a change in the flow rate through the valve. This can enhance the reliability of the flow rate determination.

Another variant of this disclosure describes a valve device, wherein the second sensor is movably arranged in the flow channel of the valve. Advantageously, this option is chosen if several different flow patterns in the flow channel of the valve can appear. This does not mean that two different flow patterns are present at the same time. A certain degree of protrusion of the second sensor into the flow channel of the valve may be optimal for a certain flow pattern. This degree of protrusion of the second sensor into the flow channel may further not be optimal with regard to other different flow patterns. Therefore, it is advantageous that the second sensor is movably arranged in the flow channel. This means the protrusion of the second sensor into the flow channel can be adapted.

For example if the second sensor has a first degree of protrusion for a first flow pattern this first degree of protrusion may not be optimal if a second flow pattern occurs in the flow channel of the valve. This second flow pattern can be induced by changes of the flow rate or changes in the temperature. These changes usually lead to another flow pattern in the flow channel of the valve. In this situation it is possible that the first degree of protrusion of the second sensor into the flow channel of the valve is no longer optimal. Therefore, the second sensor is preferably movably arranged and the protrusion of the second sensor into the flow channel can be changed to a second degree of protrusion into the flow channel. Furthermore, not only the protrusion into the flow channel can be changed it is also possible that the position of the second sensor in the valve can be changed. This means that the position and/or the protrusion of the second sensor into the flow channel of the valve can be changed and adapted with regard to the flow pattern. Therefore more detailed information about the current flow pattern can be gathered. This can improve the determination of the flow rate through the valve since more accurate or more detailed information about the flow pattern in the flow channel of the valve can be gathered.

Another variant of this disclosure describes a valve device, wherein the first sensor is located at a position in the flow channel, where a value of the local fluid velocity of a laminar flow is identical with the value of the local fluid velocity of the turbulent flow. In this variant the first sensor measures the same local fluid velocity for the laminar and turbulent flow. The different flow patterns can be considered by the measuring of the second sensor. This means that the measuring of the second sensor can result in two different flow patterns. The overall flow rate is determined depending on the measured quantities of the second sensor. In this case the measurement of the local fluid velocity by the first sensor does not suffer from a flow pattern change from laminar flow to turbulent flow or vice versa.

Another variant of this disclosure describes a valve device, wherein the valve comprises means to adjust the flow rate through the valve. In particular, these means can increase or lower the friction to the fluid flow through the valve. This can directly change the flow rate through the valve. In particular, a lever or a hand gear can change the valve lift. A changed valve lift directly can change the opening degree of the valve. By modifying the valve lift the flow rate through the valve can be changed.

In another variant of this disclosure a valve device is described, wherein the valve device is formed as a ball valve, needle valve or butterfly valve. In particular, a butterfly valve comprises a disc that can be rotated. Depending on the position of the disc in the valve relative to the wall of the valve different opening degrees can be adapted. A needle valve is often applied to relatively low flow rates. In particular, a needle valve comprises a small pot and a needle-shaped plunger. A ball valve is in particular a form of a quarter-turn valve which uses a ball with a bore that can be pivoted to control the valve lift and the flow rate through it. The ball valve is open when the ball's bore is in line with the flow channel. If the ball's bore is pivoted by 90 degrees it is completely closed. Depending on the position of the ball's bore different opening degrees of the ball valve can be realised.

Another variant of this disclosure describes a valve device, wherein the first sensor comprises a temperature sensor and a heater and the first sensor is configured to measure the local fluid velocity by applying the calorimetric measuring principle. In particular, the first sensor is configured to measure a heat loss that is induced by the flow rate of the fluid flow. Different flow rates lead to different heat losses at the first sensor. This is because different flow rates induce different amounts of heat transfer. In particular, a larger flow rate induces a larger heat transfer. The heat loss or the heat transfer can be transformed into the flow rate by considering appropriate equations and/or characteristic diagrams.

Another variant of this disclosure describes a valve device, wherein the valve device comprises a member to shape the flow pattern of the fluid flow in the flow channel of the valve. It is possible that the first or second sensor or both of them work optimally at certain flow patterns. Therefore, it can be useful to influence the flow pattern to the effect that the measurements conducted by the first and/or second sensor are optimized. Therefore, the valve device comprises a member to shape the flow pattern. A funnel can be such a member. The funnel can change the fluid velocity distribution in the flow channel of the valve. It may be possible that a funnel can change the flow pattern to a more directed flow pattern. The skilled person understands that the member to shape the flow pattern can be embodied by other objects. These objects could be a grid and/or a ball within the flow channel of the valve. By applying the member to shape the flow pattern, the measurements of the first and second sensor can additionally be optimized. This can lead to a very compact and effective valve device that can influence the flow rate and additionally measure the flow rate through the valve.

Another variant describes the valve device, wherein the fluid is incompressible. The fluid flow can be for example a liquid water flow. If the fluid is incompressible like liquid water complex phenomena like gas compression or the like do not appear. This can simplify the flow rate determination or more basic sensors that may not be as expensive can be used.

This disclosure is further described by the following figures. In these figures various examples are illustrated. It should be noted that these examples do not limit the idea of this disclosure. They only additionally describe the disclosure in order to give practical examples.

These figures show:
- FIG 1: a flow chart that shows the basic steps of this disclosure;
- FIG 2: a schematic principle of a valve with a flow channel and an actuator in a cross-sectional view;
- FIG 3: a schematic illustration of a flow channel with a valve and a thermal flow meter.

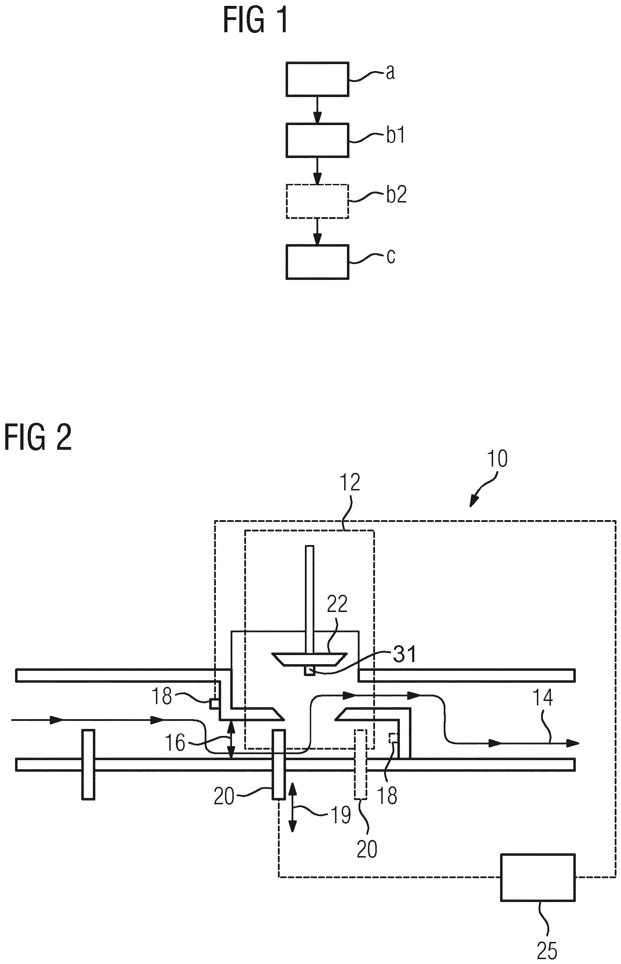

As illustrated in FIG 1, the procedure begins with a first step a). In the first step a) at least a local fluid velocity in the valve is measured. This is preferably performed by using a first sensor 18. The second step can be divided into two options. The first option of the second step b1 uses a second sensor 20 that measures a temperature of the predetermined fluid in the valve. In option b2 the second option of the second step, a third sensor 31 measures additionally to the temperature of the fluid a valve position of a valve 12. In the third step c the flow rate through the valve 12 is determined depending on the measured local fluid velocity in step a) and the measured parameters in steps b1) or b2). The flow rate through the valve 12 can also be calculated by applying an appropriate characteristic diagram and/or an adequate equation. This equation can additionally comprise one or more correction factors that consider the circumstances of a current pipe system or the used valve 12.

One advantage of this disclosure is the fact that adjusting the flow rate and measuring the flow rate can be realized within a valve device 10 without a pipe system. Usually the flow rate is not measured at the position of the valve 12 or valve device 10. In order to get representative results the measurement of the flow rate is often conducted at a pipe section before or after the valve 12. Such a pipe section can be referred to as a calming section where the turbulent effects induced by the valve 12 are not present and do not influence the measurement of the flow rate. The idea of this disclosure is to overcome the need of such a calming section. A calming section is often applied to get a representative quantity for the flow rate. Another possibility is to implement an inlet funnel or a flow rectifier into the calming section in order to get a load turbulent fluid flow. Additionally a precise determination of the flow rate is still possible thanks to the combination of the first sensor 18 and the additional sensors 20, 31 and especially their synergetic effect for the flow rate determination. The measurement and adjustment of the flow rate can be realized by one single device. The presented valve device 10 does not need a calming section before or after the valve 12 in order to get representative quantities to determine the flow rate through the valve 12. Therefore, additional costs can be reduced. This means that changing the flow rate and measuring the flow rate through the valve 12 can be realised by one single valve device 10.

FIG 2 shows the valve device 10 that comprises a flow channel 16, the first sensor 18, the second sensor 20, and an actuator in the form of a plug in order to adjust the flow rate through the valve 12. The valve 12 is indicated by a dashed line in the middle of FIG 2. A fluid flow direction 14 is indicated by small dashed arrows in FIG 2. The first sensor 18 can measure at least a local fluid velocity in the flow channel 16 of the valve device 10. In this case, the flow channel 16 narrows within the valve device 10. The second sensor 20 can be positioned at different locations within the valve device 10. In this case the second sensor 20 is located at the bottom of the flow channel 16. In particular, the second sensor measures the temperature of the fluid in the flow channel 16. Furthermore, the second sensor can measure additional quantities. These additional quantities may refer to the position of the actuator 22 within the valve 12, a local geometry of the flow channel 16 in the valve device 10, the heat capacity or heat conductivity of the fluid in the flow channel 16.

In some embodiments the second sensor 20 is also able to measure the type of the valve 12, the shape of the actuator 22, the run time of the valve 12 or a mixing ratio of the fluid that may be composed of several components. Usually, the type of the valve 12 and the type of fluid are predetermined. In many cases the second sensor 20 is focused on temperature measurements. Therefore, the second sensor 20 is often formed as a temperature sensor. In FIG 2 a third sensor 31 is shown at the bottom of the actuator 22. This third sensor 31 at the actuator 22 in FIG 2 is not formed as a temperature sensor. The third sensor 31 at the actuator 22 measures the position of the actuator 22. This means this third sensor 31 can measure the valve lift or the opening degree of the valve 12.

As shown in FIG 2, the sensors 20, 31 protrude into the flow channel 16 of the valve device 10. The second sensor 20 is movably arranged and can be shifted along a sensor direction 19. Therefore, it is possible to measure not only a single temperature value, it is possible to measure a temperature profile along the cross section of the flow channel 16. This can help to classify the flow pattern present in the valve device 10.

In general, the first sensor 18 or the several first sensors 18 measure one or more local fluid velocities. This local fluid velocity is usually not representative for the flow rate through the valve. This is due to the fact that the fluid velocity profile along a cross section through the valve is not homogenous. Instead of measuring the local fluid velocity at several positions the local fluid velocity can be adapted by using the information gathered by the sensors 20, 31. By considering the information of the sensor(s) 20, 31 the overall flow rate through the valve device 10 can be determined. In particular, the temperature measurements of the second sensor 20 allow to derive a special flow pattern present in the valve device 10.

For example by considering the information measured by the second sensor 20, a current flow pattern can be classified as a laminar flow. In another situation a turbulent flow situation can be determined by the second sensor 20. The fluid velocity profiles of a laminar flow and turbulent flow are usually different. The fluid velocity profile of a laminar flow often looks like a parable. This is often true for a laminar flow through a circular pipe. If the flow situation is turbulent the according fluid velocity profile may look significantly different. This information can be gathered by using the second sensor 20 and considering its measured information. Preferably, the first sensor 18 is positioned at a location were the fluid velocity for laminar flow is identical with the fluid velocity of a turbulent flow. In case of a straight circular pipe this position may be 0.7 times the radius of the pipe. In more complex situations for the valve device 10 an analysis can be performed beforehand to determine the best position for the first sensor 18. Such analysis can also be performed beforehand in order to determine the best position of the second sensor 20 and its degree of protrusion into the flow channel 16 of the valve device 10.

The first sensor 18 and second sensor 20 have preferably a wireless connection to a control unit 25. In the control unit 25 the information measured by the first and second sensor can be gathered and evaluated. Since the valve 12, the valve device 10, the geometry of the valve 12 and valve device 10 as well as the used fluid are usually predetermined, these pieces of information can already be available in the control unit 25. Therefore, the control unit 25 can consider a type of the valve 12 and other geometrical parameters like the shape or roughness of the flow channel 16 in the valve device 10. Preferably, the control unit 25 conducts step c of this disclosure. This means that the first sensor 18 and the second sensor 20 can transmit their measured information to the control unit 25. The control unit 25 determines or calculates the flow rate through the valve 12. In the best case only one single first sensor 18 and one single second sensor 20 are necessary. In order to improve the reliability and stability of the flow rate measurement or flow rate determination several first sensors 18 or several second sensors 20 may be installed in the valve device 10.

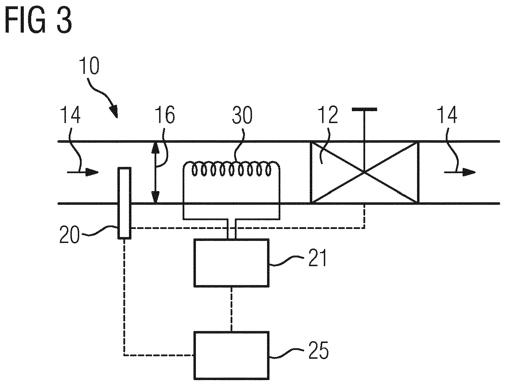

FIG 3 shows a preferred embodiment of this disclosure. FIG 3 is a schematic picture of a thermal flow meter 30. In this case the valve device 10 comprises a valve 12 and upstream of this valve 12 the thermal flow meter 30. In the flow channel 16 of the valve device 10 upstream of the thermal flow meter 30 the second sensor 20 is located. The flow direction 14 is indicated by arrows displayed in the flow channel 16. A temperature unit 21 connected to the thermal flow meter 30 is able to measure the local fluid velocity at the position of the thermal flow meter 30. Usually, this is done by measuring the heat loss that is induced at the heating section of the thermal flow meter. A higher heat loss indicates a higher local fluid velocity. The second sensor 20 and/or the thermal flow meter 30 can be included within the valve 12. For reasons of clarity, these components are separately shown in FIG 3. The information of the second sensor 20 and the temperature unit 18 are gathered by the control unit 25. Together with static information like the geometry of the pipe system or the valve type the control unit 25 is able to determine the flow rate through the valve device 10 or the valve 12. If the fluid is incompressible the flow rate through the valve 12 is the same as the flow rate to the valve device 10.

The control unit 25 can also consider the flow profile at the inlet of the valve device 10. It also may consider a differential pressure between the inlet and outlet of the valve device 10. The influences induced by the flow profile at the inlet of the valve device 10 or the differential pressure over the valve 12 may be considered with regard to the determination of the flow rate through the valve 12. This is preferably performed by the control unit 25, wherein the control unit 25 preferably considers an appropriate characteristic diagram and/or characteristic equation.

Furthermore, the second sensor 20 may also gather information about the position of the valve 12, especially the opening degree of the valve 12. This means that the second sensor 20 is not only able to measure the temperature of the fluid in the flow channel 16 of the valve device 10, it is also possible that the second sensor 20 can measure a valve position of the valve 12. This is indicated by a dashed line in FIG 3 that connects the second sensor 20 with the valve 12. If the second sensor 20 is additionally able to measure the heat capacity and/or the heat conductivity of the fluid, additional information about the fluid condition can be gathered. For example, it can be determined if the fluid suffered from ageing processes. This may be important for example in case of olive oil that can become rancid. Preferably, the second sensor 20 can gather this information and transmit it to the control unit 25. Therefore, the control unit 25 obtains more pieces of information and is able to determine the flow rate through the valve 12 more precisely. Preferably, the second sensor 20 is able to measure all parameters beside the local fluid velocity that influence the flow rate through the valve 12. To these parameters belong for example the temperature, the heat capacity, the heat conductivity, the valve position, and geometric parameters like the shape of the actuator 22 or the form and shape of the flow channel 16 within the valve device 10. This means that the second sensor 20 gathers additional information that allows a precise determination of the flow rate through the valve 12. The accuracy of determining the flow rate can be improved.

The valve device 10 can also be implemented into different pipe systems. Therefore, a modification of the control unit 25 can be sufficient. This means that static parameters like the used type of fluid or the pipe geometry can be entered as static information into the control unit 25. For example, this can be achieved by providing and transmitting an appropriate data input to the control unit 25.

The main advantage of this disclosure is on the one hand that a more accurate or more precise measurement or determination of the flow rate through the valve 12 is possible. On the other hand, this measuring principle can be realized within a single unit, the valve device 10. Often used calming sections to provide a calm flow at the region of the flow rate measurement is no longer necessary. The valve device 10 is able to handle a complex flow situation within the valve device 10. However, the flow situation within the valve device 10 is more complex than it is for example in a long straight circular pipe, the flow rate through the valve device 10 can be determined more precisely only using the valve device 10. This means that a compact valve device 10 can be provided that additionally enables a more precise flow rate determination or flow rate measurement.

It is envisaged that the valve 12 is connectable to a pipe system. It is also envisaged that the valve 12 is connected to a pipe system. According to an aspect, the valve 12 is connectable to or is connected to a pipe system via a flange.

According to an aspect, the flow rate through the valve is a volumetric flow rate. According to another aspect, the flow rate through the valve is a mass flow rate. According to yet another aspect, the flow rate through the valve is a calorimetric flow rate.

In an embodiment, the valve 12 comprises the flow channel.

In a particular embodiment, the valve 12 comprises a valve member. The valve member is selectively movable in an open position which enables fluid flow through the flow channel 16 and in a closed position which obturates fluid flow through the flow channel 16. The second sensor 20 is configured to record at least one second signal indicative of a temperature of a fluid in the flow channel 16 and of a position of the valve member.

It is envisaged that the control unit is configured to determine a flow rate through the flow channel 16.

The member to shape a flow pattern of a fluid flow is advantageously selected from
- a spherical body;
- a funnel;
- a constriction;
- a screen member;
- an orifice; or
- an aperture.

In an embodiment, the member to shape a flow pattern is arranged inside the flow channel 16. In another embodiment, the flow channel 16 comprises a port, the port being selected from an inlet or an outlet. The member to shape the flow pattern is arranged at or near the port of the flow channel 16.

As described in detail herein, the instant disclosure teaches a valve device 10 with a valve 12, the valve device 10 comprising
a flow channel 16 in the valve 12;
a first sensor 18 configured to record at least one first signal indicative of local fluid velocity in the flow channel 16;
a second sensor 20 configured to record at least one second signal indicative of a temperature of a fluid in the flow channel 16;
a control unit configured to determine a flow rate through the valve 12 based on the at least one first signal indicative of local fluid velocity and based on the at least one second signal recorded by the second sensor 20; characterized in that
the second sensor 20 is moveably arranged in the flow channel 16.

The instant disclosure also teaches a valve device 10 comprising a valve 12 and
a flow channel 16 in the valve 12;
a first sensor 18 configured to record at least one first signal indicative of local fluid velocity in the flow channel 16;
a second sensor 20 configured to record at least one second signal indicative of a temperature of a fluid in the flow channel 16;
a control unit configured to determine a flow rate through the valve 12 based on the at least one first signal indicative of local fluid velocity and based on the at least one second signal recorded by the second sensor 20; characterized in that
the second sensor 20 is moveably arranged in the flow channel 16 (in/of the valve 12).

The instant disclosure also teaches a valve device 10 comprising a valve 12 and
a flow channel 16 disposed in the valve 12;
a first sensor 18 configured to record at least one first signal indicative of local fluid velocity in the flow channel 16;
a second sensor 20 configured to record at least one second signal indicative of a temperature of a fluid in the flow channel 16;
a control unit configured to determine a flow rate through the valve 12 based on the at least one first signal indicative of local fluid velocity and based on the at least one second signal recorded by the second sensor 20; characterized in that
the second sensor 20 is moveably arranged in the flow channel 16 (in/of the valve 12).

The control unit is in operative communication with the first sensor 18 and with the second sensor 20. The control unit advantageously also is in operative communication with the third sensor 31.

The second sensor 20 is preferably configured and/or arranged to be shifted along a sensor direction 19.

The instant disclosure also teaches any of the aforementioned valve devices 10, the valve device 10 and/or the valve 12 additionally comprising a third sensor 31 configured to record at least one third signal indicative of a valve position; and
wherein the control unit is configured to determine a flow rate through the valve 12 based on the at least one first signal indicative of local fluid velocity and based on the at least one second signal recorded by the second sensor 20 and based on the at least one third signal recorded by the third sensor 31.

The valve 12 preferably comprises an actuator 22 and the third sensor 31 is configured to record at least one third signal indicative of a position of the actuator 22.

In an embodiment, the third sensor 31 is mounted to the actuator 22 and/or secured relative to the actuator 22.

It is envisaged that the actuator 22 defines the valve position.

According to an aspect of the present disclosure, the third sensor 31 is configured to record at least one signal indicative of a valve position of the valve 12.

The instant disclosure also teaches any of the aforementioned valve devices 10, wherein the third sensor 31 is moveably arranged in the flow channel 16 (in/of the valve 12).

The instant disclosure also teaches any of the aforementioned valve devices 10, wherein the second sensor 20 comprises and/or is formed as a temperature sensor and the temperature sensor protrudes into the flow channel 16.

The instant disclosure also teaches any of the aforementioned valve devices 10, wherein the valve 12 comprises means to adjust the flow rate through the valve 12 and/or through the flow channel 16.

The instant disclosure also teaches any of the aforementioned valve devices 10, wherein the valve 12 comprises an actuator 22 to adjust the flow rate through the valve 12 and/or through the flow channel 16.

The instant disclosure also teaches any of the aforementioned valve devices 10, wherein the valve device 10 comprises and/or is formed as a ball valve, a needle valve or a butterfly valve.

The instant disclosure also teaches any of the aforementioned valve devices 10, wherein the valve device 10 comprises a ball valve and/or a needle valve and/or a butterfly valve.

The instant disclosure also teaches any of the aforementioned valve devices 10, wherein the valve 12 comprises and/or is formed as a ball valve, a needle valve or a butterfly valve.

The instant disclosure also teaches any of the aforementioned valve devices 10, wherein the first sensor 18 comprises a temperature sensor and a heater; and
wherein the first sensor 18 is configured to record the at least one first signal indicative of local fluid velocity by applying a calorimetric measuring principle.

The instant disclosure also teaches any of the aforementioned valve devices 10, wherein the valve device 10 comprises a member to shape a flow pattern of a fluid flow in the flow channel 16 of the valve 12.

The instant disclosure also teaches any of the aforementioned valve devices 10, wherein the valve device 10 comprises a funnel and/or a grid and/or a ball and/or an orifice to shape a flow pattern of a fluid flow in the flow channel 16.

The instant disclosure also teaches any of the aforementioned valve devices 10, wherein the valve 12 comprises a member to shape a flow pattern of a fluid flow in the flow channel 16.

The instant disclosure also teaches any of the aforementioned valve devices 10, wherein the valve 12 comprises a funnel and/or a grid and/or a ball and/or an orifice to shape a flow pattern of a fluid flow in the flow channel 16.

Parts of the valve device 10 according to the present disclosure may be embodied in hardware, in a software module executed by a processor, in a software module executed by a processor using operating-system-virtualization or by a cloud computer, or by a combination thereof. The software may include a firmware, a hardware driver run in the operating system, or an application program. Thus, the disclosure also relates to a computer program product for performing the operations presented herein. If implemented in software, the functions described may be stored as one or more instructions on a computer-readable medium. Some examples of storage media that may be used include random access memory (RAM), magnetic RAM, read only memory (ROM), flash memory, EPROM memory, EEPROM memory, registers, a hard disk, a removable disk, other optical disks, a millipede® device, or any available media that can be accessed by a computer or any other IT equipment or appliance.

It should be understood that the foregoing relates only to certain embodiments of the disclosure and that numerous changes may be made therein without departing from the scope of the disclosure as defined by the following claims. It should also be understood that the disclosure is not restricted to the illustrated embodiments and that various modifications can be made within the scope of the following claims.

### Reference list

- a: first step
- b1: first option of second step
- b2: second option of second step
- c: third step
- 10: valve device
- 12: valve
- 14: flow direction
- 16: flow channel
- 18: first sensor
- 19: direction
- 20: second sensor
- 21: temperature unit
- 22: actuator
- 25: control unit
- 30: thermal flow meter
- 31: third sensor

## Claims

1. A valve device (10) with a valve (12), the valve device (10) comprising
a flow channel (16) in the valve (12);
a first sensor (18) configured to record at least one first signal indicative of local fluid velocity in the flow channel (16);
a second sensor (20) configured to record at least one second signal indicative of a temperature of a fluid in the flow channel (16);
a control unit configured to determine a flow rate through the valve (12) based on the at least one first signal indicative of local fluid velocity and based on the at least one second signal recorded by the second sensor (20); **characterized in that**
the second sensor (20) is moveably arranged in the flow channel (16).

2. The valve device (10) according to claim 1, the valve device (10) additionally comprising a third sensor (31) configured to record at least one third signal indicative of a valve position; and
wherein the control unit is configured to determine a flow rate through the valve (12) based on the at least one first signal indicative of local fluid velocity and based on the at least one second signal recorded by the second sensor (20) and based on the at least one third signal recorded by the third sensor (31).

3. The valve device (10) according to claim 2, wherein the third sensor (31) is moveably arranged in the flow channel (16).

4. The valve device (10) according to any one of claims 1 to 3, wherein the second sensor (20) comprises a temperature sensor and the temperature sensor protrudes into the flow channel (16).

5. The valve device (10) according to any one of claims 1 to 4, wherein the valve (12) comprises means to adjust the flow rate through the valve (12).

6. The valve device (10) according to any one of claims 1 to 5, wherein the valve device (10) comprises a ball valve, a needle valve or a butterfly valve.

7. The valve device (10) according to any one of claims 1 to 6, wherein the first sensor (18) comprises a temperature sensor and a heater; and
wherein the first sensor (18) is configured to record the at least one first signal indicative of local fluid velocity by applying a calorimetric measuring principle.

8. The valve device (10) according to any one of claims 1 to 7, wherein the valve device (10) comprises a member to shape a flow pattern of a fluid flow in the flow channel (16).

## Patentansprüche

1. Ventilvorrichtung (10) mit einem Ventil (12), wobei die Ventilvorrichtung (10) Folgendes umfasst:
einen Strömungskanal (16) in dem Ventil (12),
einen ersten Sensor (18), der so konfiguriert ist, dass er mindestens ein erstes Signal aufzeichnet, das eine lokale Fluidgeschwindigkeit im Strömungskanal (16) angibt,
einen zweiten Sensor (20), der so konfiguriert ist, dass er mindestens ein zweites Signal aufzeichnet, das eine Temperatur eines Fluids im Strömungskanal (16) angibt,
eine Steuereinheit, die so konfiguriert ist, dass sie auf der Grundlage des mindestens einen ersten Signals, das eine lokale Fluidgeschwindigkeit angibt, und des mindestens einen zweiten Signals, das von dem zweiten Sensor (20) aufgezeichnet wird, eine Durchflussrate durch das Ventil (12) ermittelt, **dadurch gekennzeichnet, dass**
der zweite Sensor (20) verschiebbar in dem Strömungskanal (16) angeordnet ist.

2. Ventilvorrichtung (10) nach Anspruch 1, wobei die Ventilvorrichtung (10) zusätzlich einen dritten Sensor (31) umfasst, der so konfiguriert ist, dass er mindestens ein drittes Signal aufzeichnet, das eine Ventilstellung angibt, und
wobei die Steuereinheit so konfiguriert ist, dass sie auf der Grundlage des mindestens einen ersten Signals, das eine lokale Fluidgeschwindigkeit angibt, und des mindestens einen zweiten Signals, das von dem zweiten Sensor (20) aufgezeichnet wird, und des mindestens einen dritten Signals, das von dem dritten Sensor (31) aufgezeichnet wird, eine Durchflussrate durch das Ventil (12) ermittelt.

3. Ventilvorrichtung (10) nach Anspruch 2, wobei der dritte Sensor (31) verschiebbar in dem Strömungskanal (16) angeordnet ist.

4. Ventilvorrichtung (10) nach einem der Ansprüche 1 bis 3, wobei der zweite Sensor (20) einen Temperatursensor umfasst und der Temperatursensor in den Strömungskanal (16) ragt.

5. Ventilvorrichtung (10) nach einem der Ansprüche 1 bis 4, wobei das Ventil (12) Mittel zum Regulieren der Durchflussrate durch das Ventil (12) umfasst.

6. Ventilvorrichtung (10) nach einem der Ansprüche 1 bis 5, wobei die Ventilvorrichtung (10) ein Kugelventil, ein Nadelventil oder eine Absperrklappe umfasst.

7. Ventilvorrichtung (10) nach einem der Ansprüche 1 bis 6, wobei der erste Sensor (18) einen Temperatursensor und eine Heizvorrichtung umfasst, und
wobei der erste Sensor (18) so konfiguriert ist, dass er das mindestens eine erste Signal aufzeichnet, das eine lokale Fluidgeschwindigkeit angibt, indem er ein kalorimetrisches Messprinzip anwendet.

8. Ventilvorrichtung (10) nach einem der Ansprüche 1 bis 7, wobei die Ventilvorrichtung (10) ein Element zum Beeinflussen eines Strömungsprofils eines Fluidstroms in dem Strömungskanal (16) umfasst.

## Revendications

1. Dispositif à vanne (10) avec une vanne (12), le dispositif à vanne (10) comprenant
un canal d'écoulement (16) dans la vanne (12) ;
un premier capteur (18) configuré pour enregistrer au moins un premier signal indiquant la vitesse de fluide locale dans le canal d'écoulement (16) ;
un deuxième capteur (20) configuré pour enregistrer au moins un deuxième signal indiquant une température d'un fluide dans le canal d'écoulement (16) ;
une unité de commande configurée pour déterminer un débit à travers la vanne (12) sur la base de l'au moins un premier signal indiquant la vitesse de fluide locale et sur la base de l'au moins un deuxième signal enregistré par le deuxième capteur (20) ;
**caractérisé en ce que**
le deuxième capteur (20) est agencé mobile dans le canal d'écoulement (16).

2. Le dispositif à vanne (10) selon la revendication 1, le dispositif à vanne (10) comprenant de plus un troisième capteur (31) configuré pour enregistrer au moins un troisième signal indiquant une position de vanne ; et
dans lequel l'unité de commande est configurée pour déterminer un débit à travers la vanne (12) sur la base de l'au moins un premier signal indiquant la vitesse de fluide locale et sur la base de l'au moins un deuxième signal enregistré par le deuxième capteur (20) et sur la base de l'au moins un troisième signal enregistré par le troisième capteur (31).

3. Le dispositif à vanne (10) selon la revendication 2, dans lequel le troisième capteur (31) est agencé mobile dans le canal d'écoulement (16).

4. Le dispositif à vanne (10) selon l'une quelconque des revendications 1 à 3, dans lequel le deuxième capteur (20) comprend un capteur de température et le capteur de température fait saillie à l'intérieur du canal d'écoulement (16).

5. Le dispositif à vanne (10) selon l'une quelconque des revendications 1 à 4, dans lequel la vanne (12) comprend des moyens pour ajuster le débit à travers la vanne (12).

6. Le dispositif à vanne (10) selon l'une quelconque des revendications 1 à 5, dans lequel le dispositif à vanne (10) comprenant une vanne à bille, une vanne à pointeau ou une vanne papillon.

7. Le dispositif à vanne (10) selon l'une quelconque des revendications 1 à 6, dans lequel le premier capteur (18) comprend un capteur de température et un élément chauffant ; et
dans lequel le premier capteur (18) est configuré pour enregistrer l'au moins un premier signal indiquant la vitesse de fluide locale par application d'un principe de mesure calorimétrique.

8. Le dispositif à vanne (10) selon l'une quelconque des revendications 1 à 7, dans lequel le dispositif à vanne (10) comprenant un organe pour mettre en forme un modèle d'écoulement d'un écoulement de fluide dans le canal d'écoulement (16).
